# EUROPEAN PATENT APPLICATION

(11) **EP 4 518 057 A1**
(43) Date of publication of application: **05.03.2025**
(21) Application number: 23306441.9
(22) Date of filing: 31.08.2023
(51) Int. Cl.: H02G 1/14

(54) **FLEXIBLE JOINT FOR POWER CABLE**

(71) Applicant: Nexans, 92400 Courbevoie (FR)
(72) Inventor: DOEDENS, Espen, 1788 Halden (NO); JACOBSEN, Brynjar, 1784 HALDEN (NO)
(74) Representative: Ipsilon

(57) **Abstract**

A method of manufacturing flexible joints (300) in power cables (100, 200) is described, along with a corresponding system (400, 401). The flexible joints are made by joining the conductors (310, 320) of two cable sections to form a joint section (300) with a region of exposed conductor (22); fitting a mould (402) around at least a portion of the region of exposed conductor (22); and forcing a casting material (409) into the mould by transfer moulding to form an outer layer (350) around the region of exposed conductor (22).

## Description

### Field of the invention

The present invention relates to the manufacture of flexible joints for power cables as well as to joints produced by such manufacture. The invention particularly relates to joints for high voltage cables, such as subsea cables for transmission of high voltage direct current (HVDC) or high voltage alternating current (HVAC).

### Background

It is known to use HVDC or HVAC cables for subsea electrical transmission. The conductor in such cables is typically made from copper or aluminium and consists of a circular centre wire surrounded by concentric layers of wires. The strands are wound in a spiral, typically with layers being wound in alternating directions, e.g. the first layer is wound in a clockwise spiral, the next layer wound in a counterclockwise spiral and so on. This provides the cable with improved flexibility. The conductor is surrounded by a plurality of insulating/protective layers, in most cases comprising an inner semiconductive layer (ISC), an insulation layer (INS), and an outer semiconductive layer (OSC).

The cables can traverse long distances across the seabed but there are limitations on the maximum lengths for production of the cables. It is therefore necessary to join the cables to allow them to span the required distances. Such joints are advantageously flexible so that the whole length of the jointed cable can be handled in a similar way. The manufacturing of flexible joints for HVAC and HVDC cable purposes is a challenging process. These joints, which may be so called flexible factory joints, should perform in a similar way to an unjointed section of the cable in terms of physical characteristics such as for handling as the cable is laid, thermomechanical characteristics, and electrical performance during use to transmit electrical power. Thus, such a joint is generally to be made from similar materials and to similar dimensions to that of the cables that are spliced by it. This traditionally has been solved with the lapping of LDPE tapes and their vulcanization to form XLPE insulation. A three-step process is also required, one for each of the ISC, INS, and OSC. For the joints to exhibit excellent dielectric performance then there is a requirement for a high degree of control over the geometry, the interfaces, cleanliness and void formation during the manufacturing process, which can make the process slow and costly.

It is known for such joints to be made with a compression moulding process where each layer (ISC, INS, OSC) is build up from pre-extruded insulating or semiconducting tapes with similar properties to that of the cable insulation. The tapes are thereafter compression moulded with heat and pressure to form a solid material. For XLPE such a process can include a vulcanizing / curing step to trigger the crosslinking reaction to form XLPE, for a thermoplastic material the compression moulding only shapes and solidifies. The aim is to provide a solid, void-free material that replicates the sheathing of the original cables.

The compression moulding process has numerous drawbacks. It is a manual and labour-intensive process with challenges to control the geometry of the final product as it hinges on the control over both the human and engineering aspects. If there is inefficient lapping of tapes resulting in an imperfect filling ratio then this can trap air in between the tape layers prior to starting the process. This air and other gases need to exit the material during the curing. The air contains oxygen which can enhance thermal degradation of the insulation during the moulding process.

Solutions to improve the known compression moulding techniques comprise exerting great care during the tape lapping or, an automated tape lapping approach. The adverse effects of trapped air and oxygen in between the taped layers may be overcome by lapping the layers in a nitrogen environment or by use of a semi-vacuum. However, these mitigating actions can make the process even more labour-intensive and even with the added steps the process is not perfect. A risk for poor geometry still exists, negatively affecting the future electrical and mechanical performance of the joint.

Another method to overcome inhomogeneities is to design an injection moulding process in which an extruder that melts the material in pellet form and propels a required volume dose of such molten material into a mould cavity. If the mould cavity can be placed around the relevant cable section then the injected molten material will in theory be able to form each layer (ISC, INS, OSC) in a single step, without risk of voids/trapped air. WO 2017/005289 describes a three-step injection moulding process for building an insulation section around the conductor. WO 2018/087581 describes a refinement of this in which the extruder continues to apply pressure as the injected plastic cools in order to inhibit formation of microvoids.

These processes have several drawbacks. Injection moulding is best suited for mass production of highly standardized parts. The flexible factory joint is produced in small numbers and involves products that may vary in size and shape due to natural tolerances as well as in the way that the conductors are cut and re-joined. The three layers in the joint would require at least two different extruders for different materials (and different material volumes), as well as three expensive moulds. Each new geometry (e.g. due to different HV cable designs or variation in dimensions) requires the manufacturing of new moulds. The injection moulding generally needs to use a set volume of the extrusion chamber in one shot and the extrusion process can introduce voids retained from the process of melting and working the feedstock, typically supplied in pellet form. The injection process will need to be re-engineered for each new joint with a different volume and cannot cope well with variations in volume due to variations in the cabling. Extruders require regular cleaning and service in between moulding operations. The extruder screws are costly, complex parts.

There is hence a need to improve over the existing injection or compression moulding methodology for factory jointing.

### Summary of the invention

Viewed from a first aspect, the present invention relates to a method of manufacturing flexible joints in power cables, the method comprising:
- joining conductors of two cable sections to form a joint section with a region of exposed conductor;
- fitting a mould around at least a portion of the region of the exposed conductor; and
- forcing a casting material into the mould by transfer moulding to form an outer layer around the region of exposed conductor.

This method can provide advantages over the known techniques. Transfer moulding can have higher dimensional tolerances than compression moulding, and unlike the prior art processes using layered tapes there is no labour intensive and failure prone layering step. Compared to injection moulding, transfer moulding has less complex equipment and lower equipment costs, whilst also potentially using higher pressures that can more uniformly fill the mould. The casting material need not be simultaneously melted and extruded via a screw system but instead it can start the process as a solid. This allows for easier cleaning/maintenance and also improved quality control for the casting material, since a solid feedstock supplied to the transfer moulding machine may be tested before use to avoid voids. Thus, the outer layer may have a lower risk of voids than either of compression moulding or injection moulding.

In addition, the use of transfer moulding has been found better able to address variability in the geometry of the joint including in the volume of material that is required to fill the joint. It is easier to perform cleaning of the equipment, and it is cheaper due to less complex geometries and components. It is further possible to bleed off possibly contaminated material from a current batch through a side opening. In addition, the process is easier to manage as there are fewer process parameters. Unlike injection moulding processes it is not required to use up the entirety of a charge in one step and a more variable amount of casting material can be left behind without significant disadvantages. This is in part due to the increased ease of cleaning of the transfer moulding machine as compared to cleaning of a screw extruder system such as that used in an injection moulding device. Moreover, an adjustment in volume to allow for differing volume moulds/variation in joint dimensions is straightforward to implement, such as by using differing sizes of feedstock and/or differing plunger length/travel distance.

The casting material may be molten material produced from a solid feedstock, such as a pre-extruded block, slab, or cylinder. The solid feedstock can be made with high quality requirements, e.g. no voids and/or high homogeneity. The method may comprise loading the solid feedstock into a plunger cavity of a heated plunger pot, and, when sufficient heating has been applied to melt all of the feedstock to form the casting material, using the plunger to force the transfer of the casting material from the plunger cavity into the mould. The heated plunger pot can be a part of a transfer moulding machine that also comprises other parts, e.g. a control system and the like. The method may include adapting the length of the plunger and/or controlling the movement of the plunger based on the volume of casting material required for the outer layer, i.e. the volume of the mould.

The method may comprise selecting the size (e.g. volume) of the solid feedstock based on the volume of the mould. The method may alternatively or additionally comprise selecting the material of the solid feedstock based on the cable layer that is being manufactured.

In some cases there may be a first casting material for an inner semiconductive layer (ISC) and an outer semiconductive layer (OSC), as well as a second casting material for an insulation layer (INS). The casting material(s) may be selected to match the corresponding layers of the cable that is being joined. The first casting material may be a semiconductor compound and the second casting material may be an insulating compound. In another variation there may be two semiconducting compounds with different characteristics for the ISC and OSC. The semiconducting compound(s) may comprise a thermoplastic material filled with semiconducting or conductive inclusions such as carbon black, carbon nanotubes, graphene, or metal particles. The insulation compound may be a thermoplastic material. An example of a thermoplastic material is a polypropylene-based thermoplastic blend. In other examples the casting material(s) may be alternatives to thermoplastic material such as XLPE, which for the semiconducting layers may include semiconducting or conductive inclusions as discussed above, e.g. carbon black.

The method may comprise using a single transfer moulding machine for multiple moulding steps including multiple different casting materials, with a step of cleaning the transfer moulding machine in between different moulding steps.

There may be multiple moulding steps comprising, for example, a first moulding step using a first mould and transfer moulding of a first volume of casting material to form a first outer layer. There may be a second moulding step using a second mould and transfer moulding of a second volume of casting material to form a second outer layer that is outside of the first outer layer. There may be a third moulding step using a third mould and transfer moulding of a third volume of casting material to form a third outer layer that is outside of the second outer layer.

In an example embodiment the first outer layer is the ISC, the second outer layer is the INS and the third outer layer is the OSC. The method may include forming the various layers with diameter similar to, or the same as, the diameter of the respective layers in the power cables that are being joined.

The completed flexible joint may have an outer diameter that is identical or only slightly larger than the outer diameter of the joined cables, e.g. less than 5% larger, preferably less than 2% larger. This allows an easier handling of the joined cables, especially when the joined cables are to be wound over a reel and then unwound for installation

In an alternative to the use of transfer moulding for all layers, one or more of a set of outer layers may be formed by the transfer moulding of the first aspect, whilst other layers are formed by other techniques. In this way there may be a hybrid technique where transfer moulding is used only for some layers of the joint (e.g. ISC, INS, and/or OSC) and/or for parts of such layers. In one example a hybrid technique may include transfer moulding a layer of insulation over the ISC, the joint cones and out to the ends. Then, to follow up this moulding, lapping the remaining insulation and compression moulding it to complete the layer. This approach may ensure a more homogeneous pressure distribution onto the inner geometries during the compression moulding process. Alternatively, all of the joint can be made with compression moulding, except for one layer, e.g. the outer semiconductive layer.

The step of forcing the casting material into the mould by transfer moulding to form an outer layer around the exposed conductor may include a multi-stage process with different pressures, e.g. including forcing a first volume of casting material into the mould and then continuing to apply pressure to introduce added material as the first volume shrinks. The method may include cooling the mould after the casting material has been forced into the mould. The method may include heating the mould before and or during the step of forcing the casting material into the mould. In some cases controlled heating (rather than cooling) may be applied after the casting material has been forced into the mould in order to allow for slower cooling time and/or to prepare the casting material for forming of a subsequent outer layer.

The step of fitting a mould around at least a portion of the region of the exposed conductor may include fitting a mould around the entire longitudinal extent of the exposed conductor. This may be done by fitting a mould around the entire longitudinal extent of the j oint section, which could for example be the length of the region of the exposed conductor along with the length of cone ends in the insulation systems of the cables. The mould may have an outer cylindrical form in order form an outer layer that has an outer cylindrical surface. The diameter of the outer cylindrical form may be selected based on the outer diameter of the layer to be formed, e.g. the outer diameter of the ISC, INS or OSC layers of the cable sections that are being joined together.

The method includes joining the conductors of two cable sections. In example embodiments the two cable sections are similar, e.g. they may be sections of the same HVDC or HVAC cable product. The conductors of the two cable sections may be joined in a known way, such as by welding, cold spray metal adhesion, screwed connections, compression ferrules and/or splicing. Advantageously the adaptability of the transfer moulding process can better cope with variations in the form/size of the join.

The method may include preparing the two cable sections before joining them, such as by removal of the outer layers (e.g. ISC, INS, OSC) to expose a part of the conductor. Thus, the region of exposed conductor may be provided by a step of stripping outer layers from end parts of the two cable sections to expose two conductor end parts before joining these conductor end parts in order to thereby join the conductors of the two cable sections. Removal of the outer layers may be done by cutting and/or shaving of the outer layers at ends of the cable sections. In many cases the outer layers are removed in a way that leaves a cone-shaped transition from the exposed conductor to the unremoved outer layers. Thus, at the joint section the cable sections may typically include a tapering section, usually with a constant taper, facing inward toward the exposed conductor. In light of this the step of fitting a mould around at least a portion of the region of the exposed conductor may include fitting a mould between the tapering sections of each of the two cable sections. The moulds for inner layers may thus have a larger length than the moulds for outer layers.

The proposed method may use a single transfer moulding machine, or there may be a modular approach where multiple transfer moulding machines, e.g. with plungers and/or plunger pots of smaller size, are placed at different points, e.g. spaced apart around the length and/or circumference of the mould. These multiple transfer moulding machines can be used to force casting material through multiple material entry points, optionally simultaneously. The modular approach advantageously allows for more similar injection parameters (pressure, temperature and time) between small and large mouldings. The multiple entry points may create a more even pressure within the mould cavity and a shorter flow path from the gate to the local point where the material sets and solidifies later. This can be a particular benefit for thin OSC layers. The modular approach also allows for tuning the individual timings on when to start each individual material transfer.

The method may include monitoring temperatures and/or pressures, such as temperatures and/or pressures of the heated plunger pot(s) and/or the casting material(s). Advantageously there are usually fewer parameters to be monitored for effective transfer moulting than is typically the case with injection moulding, which further reduces the complexity of this process.

It will be appreciated that in the above method the mould sits around the cable to form the outer extent of a mould cavity, with the cable ends of the two cable sections forming the inner extent of the mould cavity. The cable ends typically have tapering forms as discussed above, i.e. joint cones. There can be high variability in joint dimensions, for which the proposed transfer moulding already adapts well due to fewer constraints on the volume of material. To further enhance the effectiveness of the proposed transfer moulding technique then the mould for the outer layer may be manufactured using additive manufacturing, e.g. so-called 3D printing processes. This allows for moulds to better fit to the dimensions of the cable sections.

The additively manufactured moulds can be wholly additively manufactured, i.e. a single part produced entirely by additive manufacturing. Alternatively, the additively manufactured moulds may comprise an inner additively manufactured layer (e.g. radial thickness 1-50 mm) that is fitted inside a conventionally manufactured outer mould (e.g. a metallic mould that may be formed by casting or machining). By using a combination of additively manufactured and conventionally manufactured parts the mould can be made more resistant to the pressure of the transfer moulting process since the more complex additively manufactured shapes can be held in place by thicker/stronger walls.

The additively manufactured moulds can allow for complex mould designs at low costs. The moulds may comprise heating and cooling channels and/or multiple gates and runners. If the mould is additively manufactured then these can be designed in without adding much costs to the mould manufacturing. Alternatively, such features can also be included in a conventionally manufactured outer mould that is reused with replaceable inner additively manufactured parts, keeping the inner additively manufactured mould part simpler and quicker to create.

The mould can be made via additive manufacturing of metals or high temperature resin plastics with fibre reinforcement. Selective Laser Sintering (SLS) may be used for additive manufacture of metal moulds, e.g. using aluminium alloys. Stereolithography (SLA) is a suitable technique for additively manufactured plastic moulds, although other techniques are possible as well. An example resin is Rigid 10K resin with a glass fibre filler as provided by Formlabs, Inc. of the USA.

The moulds should be fitted to the form of the two cable sections. The method may include scanning of the cable sections in order to provide a 3D representation of cable ends, e.g. of cone ends thereof and/or of the outer surface of the insulation system, which may hence be a 3D representation of the required form of the mould. This may for example be done via optical profilometry of the cable ends/joint region and adaptation of the mould shape in the case of, e.g. variations in diameter, ovality, length and so on. Suitable 3D scanning techniques can be found in EP4175085 and EP3901571, for example. It will be appreciated that this is of particular benefit when the moulds are additively manufactured.

If a 3D representation of the cable ends is available then the method may include use of additive manufacturing to produce alternative (or additional) bespoke parts, such as cooling flanges to be used during the welding of the conductors. These cooling flanges can be tailored to fit any geometric imperfections of the scanned conductor, allowing the step of joining the conductors to be completed with improved control of temperature during welding, and hence improved characteristics for the final joint.

The power cables may be HVDC or HVAC cables for subsea applications. For example, they may be power cables of the types described in EP4202958. The power cable may be for carrying electrical power at voltages of more than 30 kV, especially at more than 300 kV, for example up to 800 kV, up to 1000 kV, or more. The power cables may for example have conductors with a diameter in the range 25mm to 70mm and an overall diameter of at least 15mm larger than the conductor diameter, typically at least 20mm larger. The overall diameter may be in the range 40mm to 150mm. This overall diameter may include the conductor and the insulation system layers as well as optionally amour layer(s) and/or an outer serving layer.

In a second aspect, the present invention relates to a power cable having a flexible joint produced by the method of the first aspect. The flexible joints may be produced by a method including any of the other features set out above. The power cable may be a high voltage subsea power cable.

The flexible joint may hence comprise an inner semiconductive layer, an insulating layer and an outer semiconductive layer, wherein at least one of said layers is manufactured by transfer moulding.

Viewed from a third aspect, the present invention relates to a system for manufacturing flexible joints in power cables, the system comprising:
- a mould for fitting around at least a portion of a region of exposed conductor of a joint section of two cable sections; and
- a transfer moulding machine for forcing a casting material into the mould by transfer moulding to form an outer layer around the region of exposed conductor.

The system may be for carrying out the method of the first aspect. It may thus include optional features as set out above in the discussion of that method and/or may be configured to perform the method step. The system may include a solid feedstock for producing the casting material, which may be a material as discussed above. The transfer moulding machine may include a heated plunger pot comprising a plunger cavity for receiving the solid feedstock. The heated plunger pot may be for melting the feedstock to form the casting material, wherein pressure from a plunger will force the transfer of the molten casting material from the plunger cavity into the mould. Thus, the system may comprise pathways for transfer of casting material from the heated plunger pot to the mould when the mould is fitted to the cable sections. The transfer moulding machine may comprise a control system, e.g. for carrying out the method steps discussed above. The system may include plungers of different lengths and/or the control system may be configured to control the movement of the plunger based on the volume of casting material required for the outer layer.

There may be multiple moulds for use in multiple moulding steps as discussed above.

The heated plunger pot may comprise an internal heat source, such as an electrical heater, or a heat exchange system for receiving a heat transfer medium from an external heat source. The system may include a heater and/or a cooler for heating and/or cooling the mould.

The system may comprise only a single transfer moulding machine, or there may be multiple transfer moulding machines for use in a modular approach as discussed above.

The mould(s) for the outer layer(s) may be manufactured by additive manufacturing, e.g. so-called 3D printing processes, as discussed above. The mould may comprise an inner additively manufactured layer (e.g. radial thickness 1-50 mm) that is fitted inside a conventionally manufactured metallic outer mould.

### Short description of the drawings

In the following description this invention will be further explained by way of exemplary embodiments shown in the drawings:
Figure 1 shows a cut-away view of a power cable;
Figure 2 is a side profile showing a flexible joint between two cable ends;
Figure 3 is a schematic diagram of a part complete flexible joint and a transfer moulding system;
Figure 4 shows a scanning system for scanning surface features of the cable end; and
Figure 5 is an end cross-section view with a schematic representation of possible features of a mould.

### Detailed description of example embodiments

Often, it is desirable to transmit power via subsea cables extending over long distances. Transferring power over long distances requires that separate cable lengths be joined together. For submarine applications the cables may be high voltage direct current (HVDC) cables, high voltage alternating current (HVAC) cables, extra high voltage cables (EHV), medium-voltage cables or low-voltage cables. The power cables may be power transmission cables having a rated voltage of 30 kV or higher.

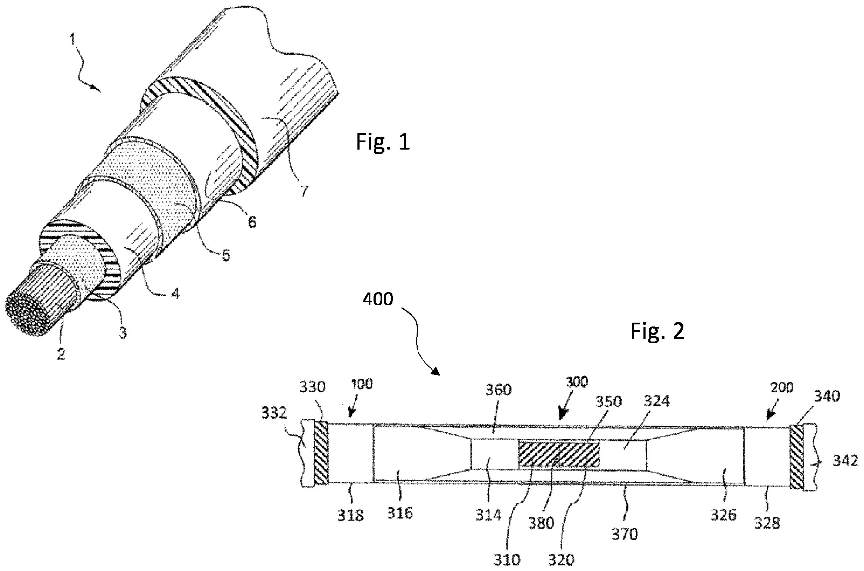

As shown in Figure 1, a known type of electric power cable 1 comprises an elongated electrical conductor 2, typically copper or aluminium, surrounded by a plurality of insulating/protective layers. These layers are positioned successively and coaxially around the conductor 2, and they include: a first semiconducting layer 3 referred to as "inner semiconducting layer" or ISC, an electrically insulating layer 4 referenced as INS, a second semiconducting layer 5 referred to as "outer semiconducting layer" or OCS. Single phase cables comprise one conductor 2. The insulation layer 4 is located between the semiconducting layers 3, 5. Normally, the conductor 2 has a generally circular cross section. The surrounding insulation 4 and semi-conducting layers 3, 5 usually have a cross-section with a similar shape to the conductor 2, i.e. normally being generally circular. These power cables 1 are typically produced by triple extrusion placing the insulation system 3, 4, 5 directly onto the conductor 2.

Added layers may also be present such as layers for adding mechanical strength and for protecting the cable against physical damage as well as chemical damage, e.g. corrosion. In this case there is an earthing and/or protective metal shield 6 and an external protective cladding 7. These added layers can be provided at a later stage of manufacture, e.g. after a joining operation to make a longer length of the inner cable parts including the conductor 2 and insulation system 3, 4, 5. Thus, when processing such cables in some operations a first step is removal of the outer protective layers 6, 7 and in other operations the initial form of the cable is without such layers.

The insulation layer 4 should have insulation properties and essentially no conductivity or very low conductivity. The semi-conducting layers 3, 5 may be rendered semi-conducting by using fillers having conducting properties, advantageously using a matrix of similar (or the same) material to the insulation layer in order to form a suitable bond between the layers. A typical insulating layer 4 may be made of a material having a conductivity of between 10⁻¹⁶ and 10⁻⁹ S/m (at 20 °C). The semiconductive layers 3, 5 may be made of a material having a conductivity between 10⁻⁵ and 10³ S/m (at 20 °C), preferably between 10⁻³ and 10 S/m (at 20 °C). The semiconductive layers 3, 5 should have a conductivity that is lower than that of the conductor 2 but higher than that of the insulation layer 4. The conductivity of the semiconductive layers 3, 5 will typically be at least 100 times higher than that of the insulating layer 4, optionally at least 1000 times higher. The conductor 2 may have a conductivity of more than 10³ S/m (at 20 °C).

When joining cables 1 of this type the cable ends are prepared by removing a part of the insulation system 3, 4, 5 and leaving "cone ends", i.e. tapering sections as seen in Figure 2, which is described below. When the conductors are joined together, e.g. by welding or splicing, then there is a cone end at either side of a region of exposed conductor. The cone end provides for stress relief as well as a suitable surface for forming replacement layers of the insulation system.

After the conductors are joined then it is necessary to replace the removed insulation system 3, 4, 5. This should be done in a way that allows the joined cables 1 to be handled as if they are original cable, i.e. the joint should be closely matched to the uncut cable in relation to issues such as mechanical, thermal, and electrical behaviours.

Figure 2 shows a factory joint system 400 comprising a flexible cable joint 300 surrounding, in part, a first electrical cable 100 and a second electrical cable 200. The first and second electrical cables may be power cables as shown in Figure 1, although it will be appreciated that other cables may also be used with the proposed joining method.

The first electrical cable 100 and the second electrical cable 200 are placed axially adjacent one to another, so as to be subsequently joined together. Each cable 100, 200 comprises an elongated electrical conductor 310, 320, an inner semiconducting layer 314, 324 surrounding and being in direct contact with the respective elongated electrical conductor 310, 320, an electrically insulating layer 316, 326 surrounding and being in direct contact with the respective inner semiconducting layer 314, 324, and an outer semiconducting layer 318, 328 surrounding and being in direct contact with the respective electrically insulating layer 316, 326.

In this example the inner semiconducting layers 314, 324, the electrically insulating layers 316, 326 and the outer semiconducting layers 318, 328 of the first and second electrical cables 100, 200 are each a thermoplastic layer obtained from a polymer composition comprising a thermoplastic material, e.g. a polypropylene-based thermoplastic material. Each electrical cable 100, 200 is then sequentially surrounded by a metal screen 330, 340 and by one or more outer jackets 332, 342 made, for example, of polyethylene.

As seen in Figure 2, the respective terminal portions of the elongated electrical conductors 310, 320 of the first 100 and the second 200 electrical cables are joined, so as to form an electrical conductor joint 380. The electrical conductor joint 380 can be obtained, for example, through a compression clamp if the elongated electrical conductors 310, 320 are made of copper, or through metal inert gas (MIG) welding if the elongated electrical conductors 310, 320 are made of aluminium.

After the conductors 310, 320 are joined then a flexible joint 300 is manufactured by replacing the outer layers of the cables. The flexible joint 300 is thus for joining together the first electrical cable 100 and the second electrical cable 200. Figure 2 shows it schematically represented in cross-section. The flexible cable joint 300 comprises an inner semiconducting layer 350, an electrically insulating layer 360 which is obtained from an insulating polymer composition comprising a thermoplastic polymer material, and an outer semiconducting layer 370.

In this example the electrical conductor joint 380 is surrounded and in direct contact with the inner semiconducting layer 350 of the flexible cable joint 300, the inner semiconducting layer 350 of the flexible cable joint 300 is surrounded and in direct contact with the electrically insulating layer 360, and the electrically insulating layer 360 of the flexible cable joint 300 is surrounded and in direct contact with the outer semiconducting layer 370. The inner semiconducting layer 350, the electrically insulating layer 360 and the outer semiconducting layer 370 are respectively configured for rebuilding the inner semiconducting layers 314, 324, the electrically insulating layers 316, 326 and the outer semiconducting layer 318, 328 of the first electrical cable 100 and the second electrical cable 200.

One or more of the layers 350, 360, 370 of the flexible cable joint 300, optionally all layers 350, 360, 370 may be manufactured by transfer moulding as discussed below. Where not all layers 350, 360, 370 are manufactured by transfer moulding then other layers can be made by compression moulding or by other means. For example, this may be done by use of a tape to be helically wound around the elongated electric conductors 310, 320 of the electrical cables 100, 200. Each tape is made of an electrically insulating or semiconducting material chemically compatible with and having substantially the same electrical properties of the corresponding electrically insulating or semiconducting material of the corresponding inner semiconducting layers 314, 324, electrically insulating layers 316, 326 and outer semiconducting layers 318, 328 of the first and second electrical cables 100, 200, so as to restore the cable continuity over the elongated electric conductors 310, 320.

The outer semiconducting layer 370 of the flexible cable joint 300 is finally covered by subsequently rebuilt layers of the metal screen 330, 340 and of the one or more outer jackets 332, 342. The metal screen rebuilding can be performed, for example, with a brazing process, while the outer jackets are usually rebuilt by using polymer (e.g. polyethylene) shrinkable tubes or adhesive tapes.

As noted above at least one of the layers 350, 360, 370 of the flexible cable joint 300 is manufactured by transfer moulding. The transfer moulding process provides advantages over known systems using tape and/or compression moulding, as discussed above. It is also a method that is much better suited than injection moulding for the manufacture of high variability factory joint geometries that are made only occasionally.

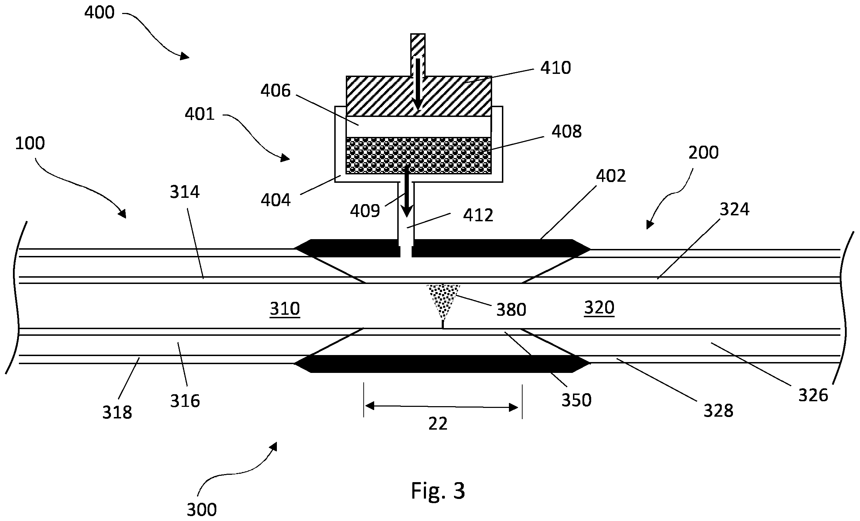

Figure 3 shows a schematic view including a partially completed flexible cable joint 300. In this case the conductor is aluminium and the two conductors 310, 320 are joined by a welded joint 380. The inner semiconducting layer 350 has already been formed onto an exposed section 22 of the conductor 2. This may have been done by transfer moulding or via other means. The inner semiconducting layer 350 of the flexible joint 300 interconnects the inner semiconducting layers 314, 324 of the two cables 100, 200 with a physical form that is very similar, thus providing the join with similar electrical and mechanical properties. The electrically insulating layer 360 is about to be put in place via transfer moulding.

As seen in the schematic diagram of Figure 3 a transfer moulding system comprises a transfer moulding machine 401 and a mould 402 that surrounds the intended location of the joint at the region of the exposed conductor 22. The mould 402 is in this case sized to form an electrically insulating layer 360 for the flexible joint 300. This should be of the same size (diameter) as the electrically insulating layers 316, 326 of the cables that are being joined. The transfer moulding system also comprises a heated plunger pot 404 with a plunger cavity 406. A solid feedstock 408 is loaded into the plunger cavity 406 and heated until it is melted to the correct point for transfer into the mould 402. The volume of the solid feedstock 408 may be selected based on the volume to be filled within the mould 402. Once the feedstock 408 is heated to form a sufficiently flowable casting material 409 then a plunger 410 is used to force the casting material 409 from the plunger cavity 406 via suitable flow paths 412 into the mould 402. Pressure from the plunger 410 may be maintained during a cooling phase in order to allow further transfer of casting material 409 in the event of shrinkage within the mould 402. When the material of the insulating layer 360 for the flexible joint 300 has sufficiently solidified then the mould 402 is removed and a new mould may be put in place for formation of the outer semiconducting layer 370 of the flexible cable joint 300.

The mould 402 can be formed by conventional processes such as by machining or casting. However, there are advantages if it is formed by additive manufacturing, i.e. 3D printing, since this can allow for more complex shapes as well as for moulds 402 that are tailored to fit the outer form of the power cable that is to be fitted with the joint. By means of 3D scanning systems it is possible to create a virtual representation of the outer surface 15 of the power cable, which then allows for a 3D printed mould to replicate the surface features including variations in smoothness as well as shape.

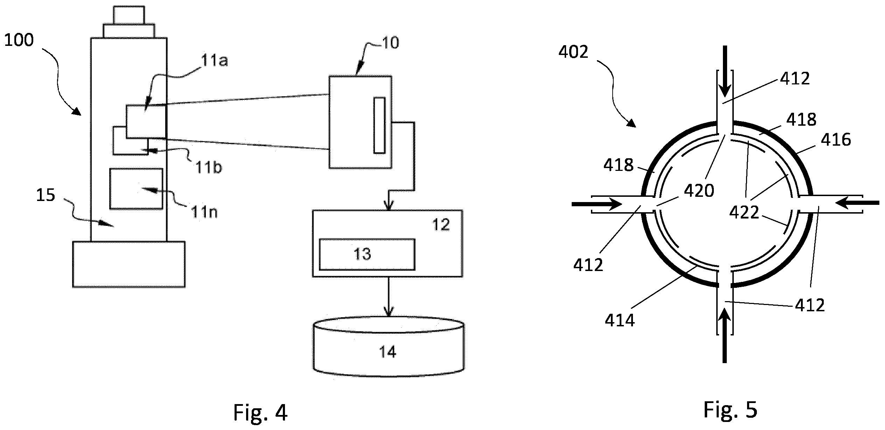

Figure 4 is a schematic illustration of a system for scanning the surface 15 of a cable end, which may for example be the end of a cable 100 of Figures 2 and 3. The system comprises a non-contact surface scanner 10 providing information to an analysis device 12 with a processor 13. The non-contact surface scanner 10 is directable to a sub-area 11a, 11b, ..., 11n of the surface 15 of the cable 100. The sub-area 11a, 11b, ..., 11n on the surface 15 may be defined by the field-of-view or scanning area of the non-contact surface scanner 10. The sub-area 11a, 11b, ..., 11n may be round, rectangular, linear or any other shape as determined by the non-contact surface scanner. The non-contact surface scanner 10 is arranged to measure the distance to the surface 15 of the sub-area 11a, 11b, ..., 11n. The non-contact surface scanner 10 is movable around the end of cable 100 such that the surface 15 of the end of cable 100 is covered by a plurality of sub-areas 11a, 11b, ..., 11n. The size of plurality of sub-areas 11a, 11b, ..., 11n may vary, for example by varying the distance between the non-contact surface scanner 10 and the end of cable 100. The non-contact surface scanner 10 may be a 3D laser scanner. The non-contact surface scanner 10 is freely movable in any direction around the end of cable 100, for example it may be a handheld 3D laser scanner.

The non-contact surface scanner 10 can determine its position and direction in 3D space, such as by recognizing a plurality of markers (not shown) positioned on the surface 15 or located at known points relative to the surface 15. The markers may be stickers or sterile clamps with specific patterns or markers thereon. The markers will result in "NaN" (not a number = empty) areas underneath them, however, the scan can be paused, markers/clamps relocated and then the measurement can also scan the area under the markers. In another embodiment the non-contact surface scanner 10 may be mounted to a jig, e.g. mountable to the cable 100, such that the non-contact surface scanner 10 may be moved up/down and around the surface 15 to completely fill the surface 15 with sub-areas 11a, 11b, ..., 11n. In this way, using markers may be avoided.

This system can obtain a virtual representation of the end of cable 100, via processor 13 and analysis device 12, which then can provide an input for the shape of an additively manufactured mould 402. This may be stored at a server 14, which can also transmit it to other devices, e.g. an additive manufacturing device (not shown).

The mould 402 will typically have a cylindrical form since the intention is to match the flexible joint 300 to the form of the cable. Figure 5 shows a schematic end cross-section view of a possible mould 402. In this case the mould is of a cylindrical shape designed to be placed about the region of exposed conductor 22 to form one of the layers 350, 360, 370 of the insulation system. It has an inner additively manufactured layer 414 that is held within a conventionally manufactured outer mould 416. The outer mould 416 may provide structural strength and it is depicted in Figure 5 via the thicker outer line.

The inner additively manufactured layer 414 may contain features based on a 3D scan of the cable as discussed above. It can also include channels 418 for heating and/or cooling provided by hollow chambers 418 or other passageways, i.e. channels 418 for flow of a heat transfer fluid into and out of the mould 402 via suitable openings (not shown). In this example the mould 402 is configured for use with an array of multiple transfer moulding machines 401 that are used to transfer multiple volumes of casting material into the mould 402 at the same time. This is done via multiple flow paths 412 that can be coupled to the multiple transfer moulding machines 401. The additively manufactured inner layer 414 of the mould 402 is provided with multiple gates 420 and runners 422 for even distribution of the casting material.

### List of reference numbers:

1 Power cable
2 Electrical conductor
3 Inner semiconducting layer
4 Electrical insulating layer
5 Outer semiconducting layer
6 Metal shield
7 Protective cladding
10 Non-contact surface scanner
11a, 11b,...11n sub area of cable surface
12 Analysis device
13 Processor
14 Server
15 Cable surface
22 Region of exposed conductor
100 First electrical cable
200 Second electrical cable
300 Flexible cable joint
310 Elongated electrical conductor of first electrical cable
314 Inner semiconducting layer of first electrical cable
316 Electrically insulating layer of first electrical cable
318 Outer semiconducting layer of first electrical cable
320 Elongated electrical conductor of second electrical cable
324 Inner semiconducting layer of second electrical cable
326 Electrically insulating layer of second electrical cable
328 Outer semiconducting layer of second electrical cable
330 Metal screen of first electrical cable
332 Outer jacket of first electrical cable
340 Metal screen of second electrical cable
342 Outer jacket of second electrical cable
350 Inner semiconducting layer of flexible cable joint
360 Electrically insulating layer of flexible cable joint
370 Outer semiconducting layer of flexible cable joint
380 Electrical conductor joint
400 Factory joint system
401 Transfer moulding machine
402 Mould
404 Heated plunger pot
406 Plunger cavity
408 Solid feedstock
409 Casting material
410 Plunger
412 Flow path
414 Inner additively manufactured layer
416 Outer mould
418 Channels
420 Gate
422 Runner

## Claims

1. A method of manufacturing flexible joints (300) in power cables (1), the method comprising:
- joining conductors (2, 310, 320) of two cable sections (100, 200) to form a joint section with a region of exposed conductor (22);
- fitting a mould (402) around at least a portion of the region of the exposed conductor (22); and
- forcing a casting material (409) into the mould (402) by transfer moulding to form an outer layer (350, 360, 370) around the region of exposed conductor (22).

2. The method as claimed in claim 1, wherein the casting material (409) is molten material produced from a solid feedstock (408) and the method comprises: loading the solid feedstock (408) into a plunger cavity (406) of a heated plunger pot (404), and, when sufficient heating has been applied to melt all of the solid feedstock (408) to form the casting material (409), using a plunger (410) to force the transfer of the casting material (409) from the plunger cavity (406) into the mould (402).

3. The method as claimed in claim 2, comprising one or more of: adapting the length of the plunger (410), controlling the movement of the plunger (410), and/or selecting the size of the solid feedstock (408), based on the volume of the mould (402).

4. The method as claimed in claim 1, 2 or 3, comprising using a single transfer moulding machine (401) for multiple moulding steps including multiple different casting materials (409), and cleaning the transfer moulding machine (401) in between the multiple moulding steps.

5. The method as claimed in any preceding claim, comprising a first moulding step using a first mould (402) and transfer moulding of a first volume of casting material (409) to form a first outer layer (350), a second moulding step using a second mould (402) and transfer moulding of a second volume of casting material (409) to form a second outer layer (360) that is outside of the first outer layer (350), and a third moulding step using a third mould (402) and transfer moulding of a third volume of casting material (409) to form a third outer layer (370) that is outside of the second outer layer (360).

6. The method as claimed in any of claims 1 to 4, comprising forming one or more outer layer(s) of a set of multiple outer layers (350, 360, 370) by transfer moulding, whilst one or more other layer(s) in the set of multiple outer layers (350, 360, 370) is formed by other techniques.

7. The method as claimed in any preceding claim, comprising using multiple transfer moulding machines (401) placed at different points about the mould (402).

8. The method as claimed in any preceding claim, wherein the mould (402) for the outer layer (350, 360, 370) is manufactured using additive manufacturing.

9. The method as claimed in claim 8, wherein the additively manufactured mould (402) comprises an inner additively manufactured layer (414) that is fitted inside a conventionally manufactured outer mould (416).

10. The method as claimed in any preceding claim, wherein the mould (402) comprises channels (418) for heating and/or cooling.

11. The method as claimed in any preceding claim, comprising using an array of transfer moulding machines (401) to transfer multiple volumes of casting material (409) into the mould (402) at the same time using multiple gates (420) and runners (422).

12. The method as claimed in any preceding claim, comprising scanning of the cable sections (100, 200) in order to provide a 3D representation of cable ends in order to set the required form of the mould (402).

13. A power cable (1) comprising a flexible joint (300) manufactured by the method of any preceding claim.

14. A system for manufacturing flexible joints (300) in power cables (1), the system comprising:
- a mould (402) for fitting around at least a portion of a region of exposed conductor (22) of a joint section (300) of two cable sections (100, 200); and
- a transfer moulding machine (401) for forcing a casting material (409) into the mould (402) by transfer moulding to form an outer layer (350, 360, 370) around the region of exposed conductor (22).

15. The system as claimed in claim 14 being configured to carry out the method of any of claims 1 to 12.
